# EUROPÄISCHE PATENTSCHRIFT

(11) **EP 2 399 308 B1**
(45) Veröffentlichungstag und Bekanntmachung des Hinweises auf die Patenterteilung: **19.02.2014**
(21) Anmeldenummer: 09796963.8
(22) Anmeldetag: 16.12.2009
(51) Int. Cl.: H01M 2/02, H01M 2/30, H01M 10/04, H01G 9/10, H01G 11/02, H01G 11/12, H01G 11/72, H01G 11/76, H01G 11/82, H01G 9/00, H01G 9/008, H01G 9/22

(54) **GALVANISCHE ZELLE**
GALVANIC CELL
CELLULE GALVANIQUE

(30) Priorität: 23.02.2009 DE 102009010147
(43) Veröffentlichungstag der Anmeldung: 28.12.2011
(73) Patentinhaber: Li-Tec Battery GmbH, 01917 Kamenz (DE)
(72) Erfinder: EICHINGER, Günter, 63674 Altenstadt (DE); HOFMANN, Jürgen, 01917 Kamenz (DE); BREU, Jörg, 01917 Kamenz (DE)
(74) Vertreter: Wallinger, Michael
(86) Internationale Anmeldenummer: PCT/EP2009/009031
(87) Internationale Veröffentlichungsnummer: WO 2010/094314

(56) Entgegenhaltungen:
- EP-A2- 1 798 787
- WO-A1-2006/068373
- JP-A- 58 197 655
- JP-A- 61 032 348
- JP-A- 2000 260 478
- US-A- 5 948 562
- US-A1- 2004 002 000

## Beschreibung

Die Erfindung betrifft eine galvanische Zelle. Solche galvanischen Zellen werden für unterschiedliche Anwendungen in verschiedenen Bereichen der Technik benötigt und verwendet. Bei den meisten Anwendungen geht es neben anderen Zielsetzungen auch darum, die raumbezogene Energiedichte, also die gespeicherte Energie bezogen auf das Volumen der galvanischen Zelle zu maximieren. Galvanische Zellen eignen sich zum Aufbau von Batterien aus einer Mehrzahl solcher Zellen, weshalb solche Zellen gelegentlich auch als Batteriezellen bezeichnet werden.

Bekannt sind flach und rechteckig gebaute galvanische Zellen deren elektrochemisch wirksamer Inhalt, meist ein sogenannter Folienstapel, von einer meist zweiteiligen folienartigen Verpackung umgeben ist, durch die elektrische Anschlüsse in Blechform ("Ableiter" oder "Ableiterbleche") geführt sind. Die Folie besteht häufig aus einer beidseitig mit einem elektrisch isolierenden Kunststoff beschichteten Aluminiumfolie. Derart aufgebaute Batteriezellen werden häufig Pouch-Zellen bzw. Coffeebag-Zellen genannt. Die elektrische Spannung wird häufig durch form-, kraft- oder stoffschlüssig an die Ableiterbleche angebundene Kontaktelemente abgegriffen. Diese können ein- oder beidseitig an die Ableiter anschließen. Die Kontaktelemente sind bei Einzelzellen direkt oder indirekt mit den elektrischen Stromverbrauchern bzw. Stromquellen verbunden bzw. dienen bei Batterien oder Zellblöcken der elektrischen Reihen- oder Parallelschaltung der Zellen.

Ein wichtiges Unterscheidungsmerkmal solcher Zellen zu anderen Zellbauformen ist, dass die Verpackung nicht spannungsführend ist sondern elektrisch neutral. Die Ableiter werden isoliert durch die Verpackung hindurchgeführt.

Im Hinblick auf das Ziel, die raumbezogene Energiedichte zu maximieren, ist es häufig nachteilig, wenn die seitliche ("radiale", d.h. parallel zum flächigen Teil der Zellverpackung ausgerichtete) Herausführung der Ableiter durch Schweißstellen in der Verpackung zu einem Verlust an nutzbarem Bauraum führt.

Die US 5 948 562 A offenbart eine elektrochemische Zelle mit einer mehrschichtigen Struktur und mit einer Metallfolie, die zwischen Schichten aus thermoplastischem Kunststoff und einem heißsiegelbaren Polymer angeordnet ist.

Die US 2004/002000 A1 offenbart eine Sekundärbatterie mit einem Gehäuse mit ersten und zweiten flachen Endabschnitten.

Die JP 61 032348 offenbart eine Elementarzelle mit einer ersten positiven Elektrode mit einem Ladungskollektor, eine zweiten positive Elektrode mit Mangandioxid, mit einem Separator, einem negativen aktiven Elektrodenmaterial, einem Zinkblech und einem negativen Elektrodenanschluss.

Die JP 58 197 655 offenbart eine Batterie mit einer Lead-out-Elektrode und Anschlussteilen, gebildet durch korrosionsbeständiges Blech aus Edelstahl oder Aluminium.

Die JP 2000 260 478 offenbart eine flache, nicht-wässrige Sekundärbatterie mit einer Energie von 30 Wh oder mehr und einer Volumen-Energiedichte von 180 Wh / I oder mehr.

Die EP 1 798 787 A2 offenbart Ein Batteriemodul mit einer Mehrzahl von gebrauchten Batterien, die aufeinander in einer Dickenrichtung gestapelt sind.

Die WO 2006/068373 offenbart eine Sekundärbatterie mit einer Vielzahl von Einheitszellen, die elektrisch miteinander verbunden und aufeinander gestapelt sind.

Der vorliegenden Erfindung liegt die Aufgabe zugrunde, einen Beitrag zur Maximierung der raumbezogenen Energieeffizienz von Installationen solcher galvanischen Zellen zu leisten. Diese Aufgabe wird durch eine galvanische Zelle nach Anspruch 1 gelöst.

Bei dieser erfindungsgemäßen galvanischen Zelle mit einem im Wesentlichen flachen Gehäuse und mindestens zwei elektrischen Ableitern entgegen gesetzter elektrischer Polarität zur Ableitung der in der galvanischen Zelle gespeicherten Energie sind die Ableiter oder das Gehäuse so ausgestaltet, dass die Ableiter über fensterförmige, im Wesentlichen in Ebenen parallel zur flachen Gehäuseoberfläche der Zelle angeordnete Aussparungen des Gehäuses von außen für elektrische Kontakte zugänglich sind.

Unter einer galvanischen Zelle im Sinne der vorliegenden Erfindung sind dabei elektrische Zellen aller Art zu verstehen, insbesondere auch Kondensatoren oder elektrochemische Zellen, und bei letzteren insbesondere primäre und/oder sekundäre Zellen. Aus dem Gehäuse solcher galvanischen Zellen werden mindestens zwei Anschlusselemente oder Elektroden, die vom Fachmann gewöhnlich auch als Ableiter oder Ableiterbleche bezeichnet werden nach außen geführt, die zur Ableitung der in der galvanischen Zelle gespeicherten Energie dienen. Diese Ableiter ragen häufig nur an einigen Stellen aus dem Gehäuse heraus.

Unter einer fensterförmigen, im Wesentlichen in einer Ebene parallel zur flachen Gehäuseoberfläche der Zelle angeordneten Aussparung des Gehäuses soll in diesem Zusammenhang jede Struktur verstanden werden, welche die Ableiter von einer flachen Seite der Zelle her für Kontaktierungen zugänglich macht. Vorzugsweise sind diese Strukturen so ausgestaltet, dass die Ableiter von den schmalen Gehäusekanten her gegen eine beispielsweise bestimmungswidrige Kontaktierung durch die isolierenden Eigenschaften des Gehäusematerials geschützt sind.

Vorteilhafte Weiterbildungen der Erfindung bilden den Gegenstand von Unteransprüchen. Im Folgenden wir die Erfindung anhand bevorzugter Ausführungsbeispiele und mit Hilfe von Figuren näher beschrieben.

### Dabei zeigt

Fig. 1 eine galvanische flache galvanische Zelle nach einem ersten Ausführungsbeispiel das nicht zur vorliegenden Erfindung gehört;
Fig. 2 eine Explosionsdarstellung des Folienstapels einer galvanischen Zelle nach dem ersten Ausführungsbeispiel;
Fig. 3 eine Explosionsdarstellung der galvanischen Zelle nach dem ersten Ausführungsbeispiel;
Fig. 4 eine Teilansicht eines Schnitts durch eine Zelle nach dem ersten Ausführungsbeispiel;
Fig. 5 eine Ansicht eines zweiten Ausführungsbeispiels das zur vorliegenden Erfindung gehört;
Fig. 6 eine Ansicht eines dritten Ausführungsbeispiels, das nicht zur Erfindung gehört jedoch mit der vorliegenden Erfindung kombiniert werden kann;
Fig. 7 eine Explosionsdarstellung des Folienstapels einer galvanischen Zelle nach dem dritten Ausführungsbeispiel;
Fig. 8 eine Explosionsdarstellung der galvanischen Zelle nach dem dritten Ausführungsbeispiel;
Fig. 9 eine Teilansicht eines Schnitts durch eine Zelle nach dem dritten Ausführungsbeispiel;
Fig. 10 eine Ansicht eines vierten Ausführungsbeispiels der vorliegenden Erfindung;
Fig. 11 eine Ansicht eines Zellenblocks aus Zellen gemäß dem vierten Ausführungsbeispiel der vorliegenden Erfindung.

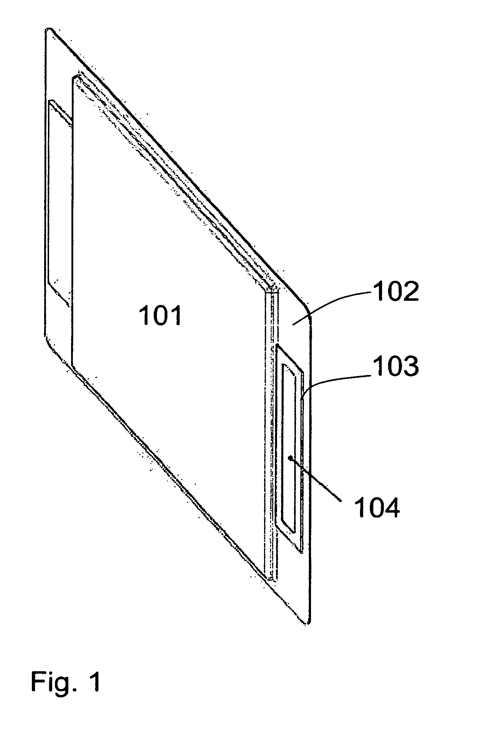

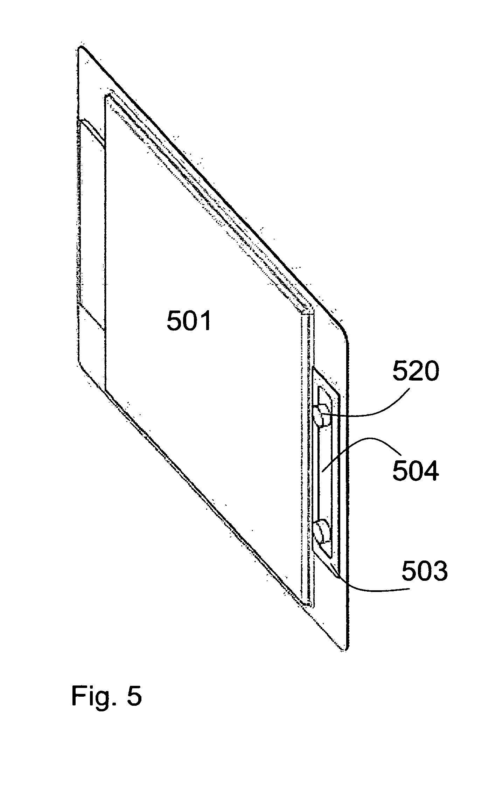

Wie in Figur 1 dargestellt, ragen die Ableiter 104 einer Zelle 101 nicht seitlich aus der isolierenden Verpackung 102 heraus, sondern werden, abgesehen von einer fensterförmigen Aussparung 103 in der Verpackung von außen zugänglich. Möglich ist dabei auch, dass die Ableiter von einem Teil der Verpackung eingeschlossen und in diese eingesiegelt werden. Die Ableiter 104 liegen an der fensterartigen Aussparung 103 der Verpackungsfolie 102 frei. Bei solchen und anderen Ausführungsformen können die Ableiter als flaches Blech ausgeführt sein oder zusätzliche Kontakthülsen 520 oder Leisten tragen, wie dies in Figur 5 für eine Ausführungsform der Erfindung gezeigt ist. Diese zusätzlichen Kontakthülsen oder Leisten können beispielsweise den Abstand zur nächsten Zelle eines Zellblocks überbrücken.

Wenn die Fenster, vorzugsweise im Bereich außerhalb einer Schweißzone, zwischen einem Ableiter und den Enden des Elektrodenstapels (Anoden- und Katodenfolien) angeordnet werden, kann der Ableiter nach der Vorder- und Rückseite der Zelle frei liegen. Dies erleichtert die Kontaktierung und Fixierung der Zellen, da in diesem Fall durch den Ableiter Löcher für Zuganker und ähnliche Einrichtungen zum Aufbau eines Zellenblocks aus einer Mehrzahl von galvanischen zellen eingebracht werden können.

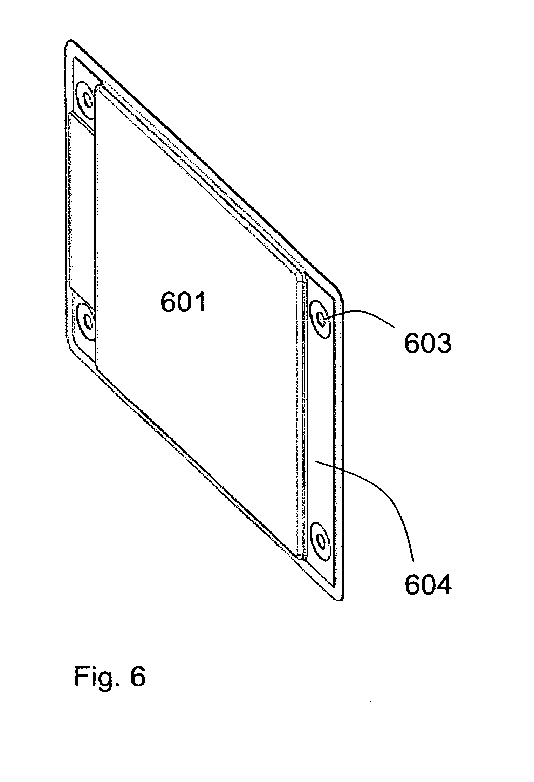

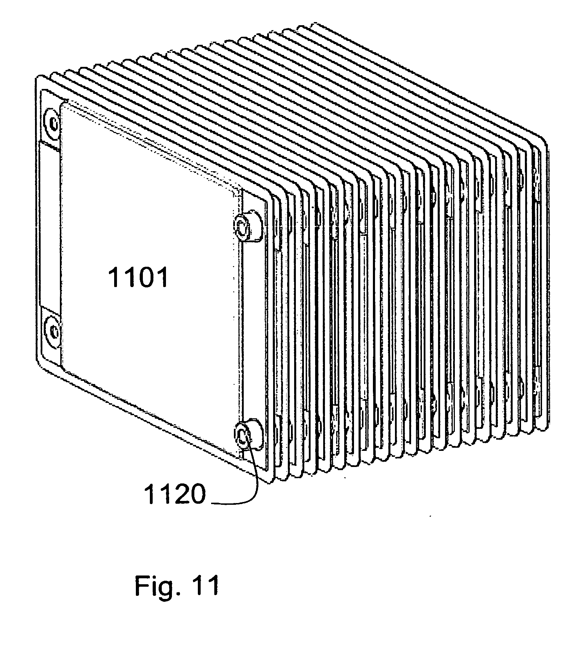

Die Figuren 1 bis 4 zeigen ein erstes Ausführungsbeispiel, bei dem die Ableiter von jeweils einer Seite (von oben oder von unten) der Zelle her zugänglich sind. Die Figuren 6 bis 10 zeigen eine weitere Ausführungsform, bei der die Verpackung oben und unten im Bereich der Enden des Ableiters mit Fenstern versehen ist und die Ableiter von beiden Seiten zugänglich sind. Die Zellen gemäß dieser Ausführungsform lassen sich besonders gut mechanisch an den Ableitern fixieren, beispielsweise beim Aufbau eines Zellblocks, weil diese vollständig und damit belastbar in der Verpackung der Zelle liegen, wie dies besonders in Figur 11 gezeigt ist.

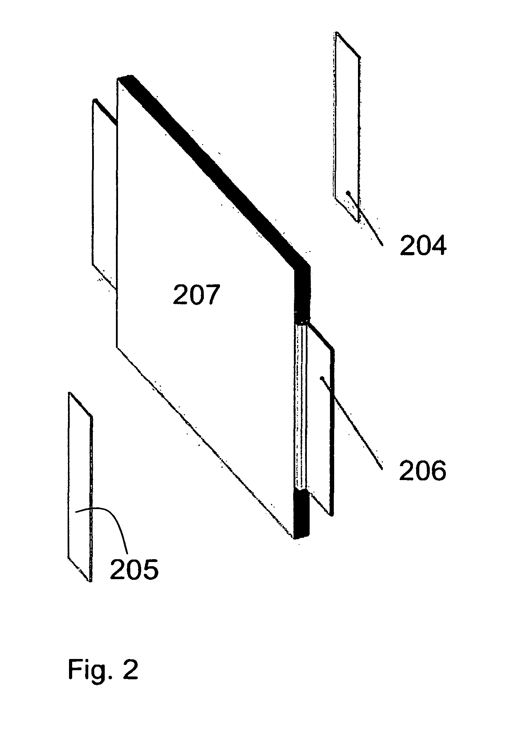

In Figur 2 ist eine Explosionsdarstellung des Folienstapels einer galvanischen Zelle nach dem in Figur 1 gezeigten Ausführungsbeispiel dargestellt. Die Elektroden 206 des Elektrodenstapels 207 sind in gewohnter Weise an den Enden des Elektrodenstapels nach außen geführt. In diesem Beispiel werden die Ableiterbleche 204, 205 zur mechanischen Stabilisierung auf die Elektroden aufgebracht.

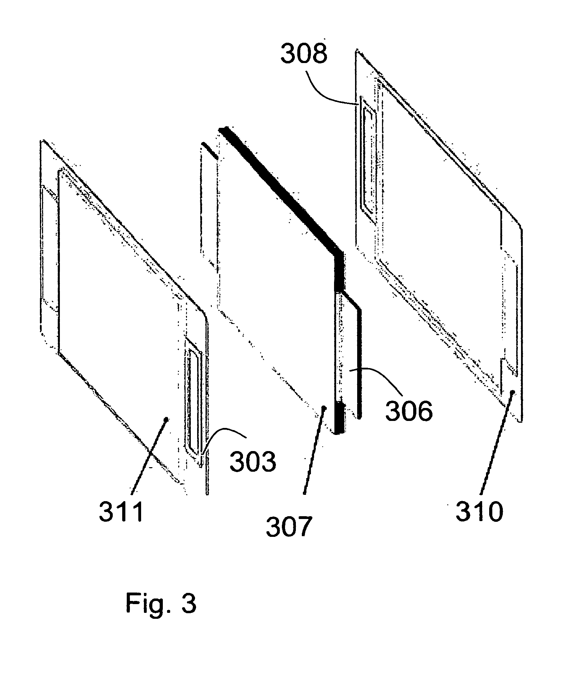

Figur 3 zeigt den Aufbau einer Zelle dieses Ausführungsbeispiels unter Hinzufügung der oberen und unteren Gehäuseteile, bzw. Verpackungsteile. Das untere Gehäuseteil 310 weist eine fensterförmige Aussparung 308 auf und der obere Gehäuseteil 311 weist eine entsprechende am anderen Ende des Elektrodenstapels gelegene fensterförmige Aussparung 303 auf, über welche der Ableiter 306 und damit die mit ihm elektrisch verbundenen Elektroden 306 des Elektrodenstapels 307 von außen durch die fensterförmige Aussparung 303 elektrisch zugänglich sind.

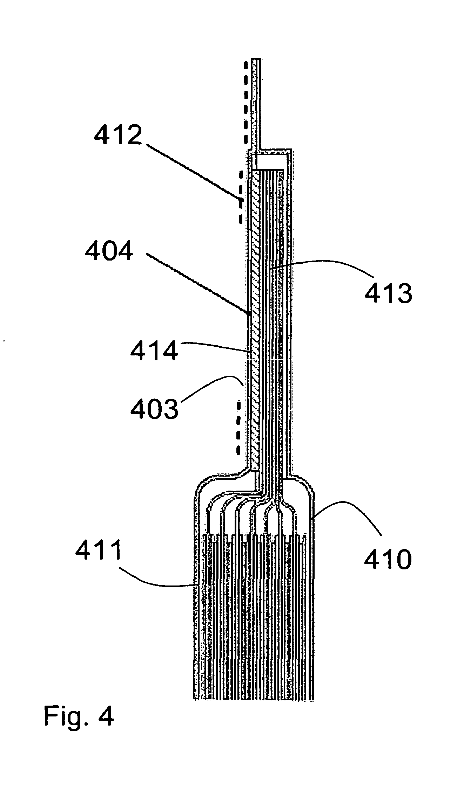

In der Figur 4 ist eine Teilansicht eines Schnittes durch eine Zelle gemäß dem in Figuren 1 bis 3 dargestellten Ausführungsbeispiel dargestellt. Zwischen dem unteren Teil 410 der Verpackung (Gehäuse) und dem oberen Teil 411 der Verpackung ist die Zelle mitsamt dem Ableiter nahezu komplett eingesiegelt 412. Zugänglich ist das Ableiterblech 414 von außen nur über die Öffnung 404 in der fensterförmigen Aussparung 403 des Gehäuses.

In Figur 5 ist als zweites Ausführungsbeispiel, das zur Erfindung gehört, eine Variante des ersten Ausführungsbeispiels dargestellt, bei der mindestens ein Ableiter 504 mit Strukturelementen 520 zur Unterstützung seiner Kontaktierung ausgestattet ist. Diese Strukturelemente weisen dabei eine nicht vernachlässigbare Ausdehnung in einer Richtung auf, die senkrecht zu den Ebenen parallel zur flachen Gehäuseoberfläche der Zelle ausgerichtet ist. An Stelle der in Figur 5 gezeigten Noppen oder Kontakthülsen 520 können auch entsprechend geformte Leisten oder andere Strukturen den gleichen Zweck erfüllen.

Figur 6 zeigt ein drittes Ausführungsbeispiel, bei dem die Verpackung oben und unten im Bereich der Enden des Ableiters mit Fenstern versehen ist und bei dem die Ableiter von beiden Seiten zugänglich sind. Die Ableiter sind mit Durchbrüchen 603 versehen, welche zur mechanischen Fixierung der Zellen an den Ableitern beim Aufbau eines Zellblocks verwendet werden können.

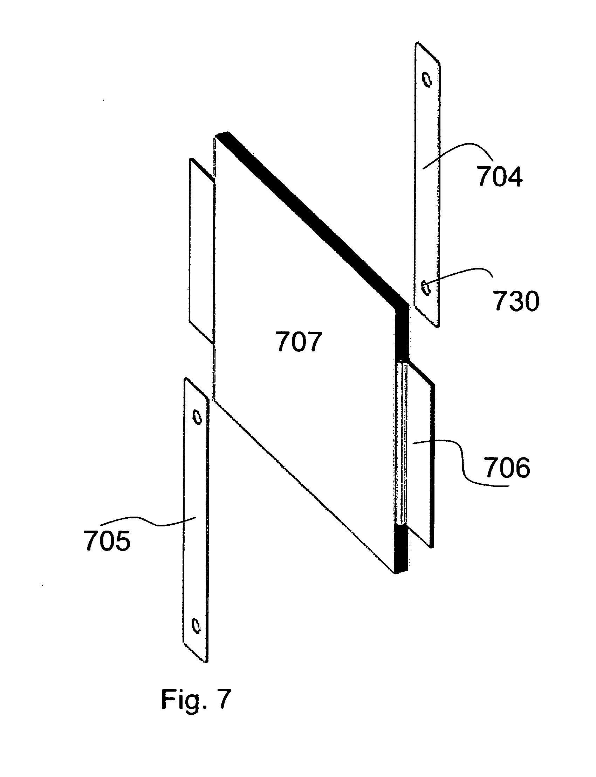

Figur 7 zeigt eine entsprechende Explosionsdarstellung dieser Ausführungsform mit einem Zellstapel 707, mit aus dem Stapel herausgeführten Elektroden 706, mit entsprechenden Ableiterblechen 704, 705 und in diesem Fall runden Durchbrüchen 730 in den Ableiterblechen.

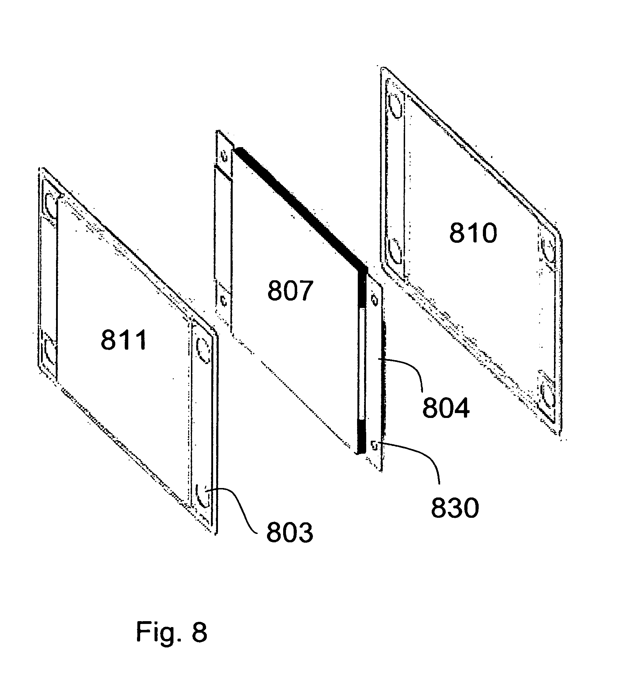

Figur 8 zeigt eine entsprechende Explosionsdarstellung mit den unteren 810 und oberen 811 Gehäuseteilen, die ebenfalls mit entsprechenden Durchbrüchen 803 versehen sind, durch welche die Ableiterbleche 804 des Elektrodenstapels 807 mit ihren Durchbrüchen 830 von außen elektrisch zugänglich sind.

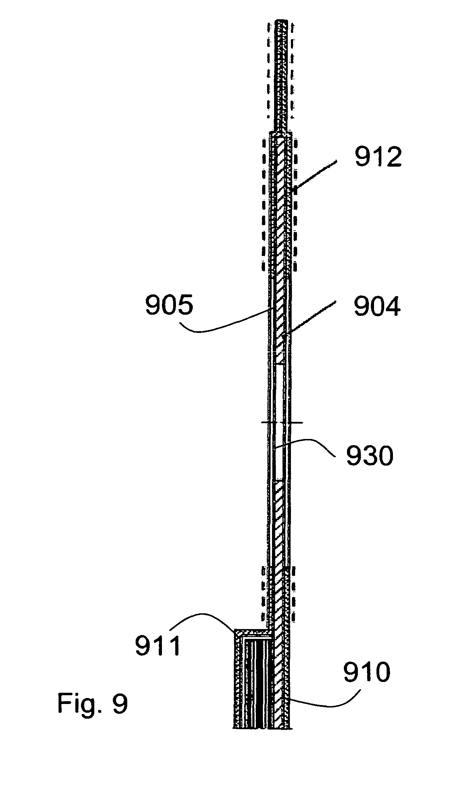

Ein entsprechendes Schnittbild einer solchen Zelle wird in Figur 9 dargestellt. Ähnlich wie bei anderen Ausführungsformen der Erfindung wird hier der Elektrodenstapel zusammen mit den Ableiterblechen 904 nahezu komplett durch die unteren 910 und oberen 911 Verpackungsteile versiegelt. Diese Versiegelung 912 ist lediglich im Bereich der fensterförmigen Aussparung 905 der Verpackung durchbrochen, durch welche das Ableiterblech 904 mit seiner Durchbrechung 930 von außen zugänglich wird.

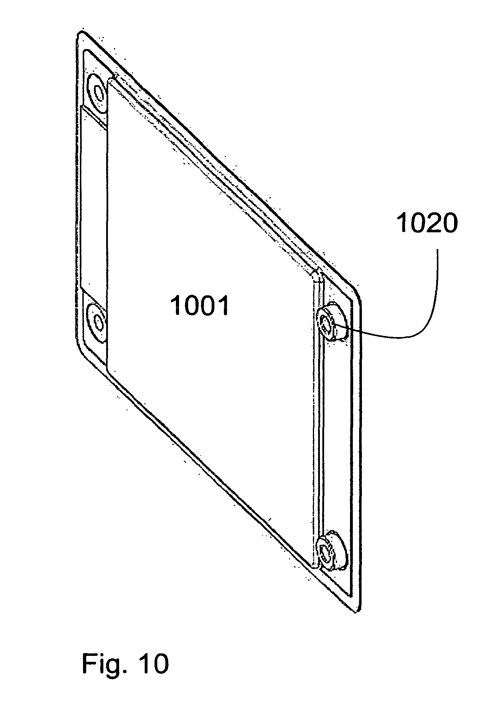

Auch diese Ausführungsform ist - wie dies in Figur 10 gezeigt wird - in einer Variante ausführbar, bei welcher die Ableiterbleche der Zelle 1001 mit zusätzlichen Strukturelementen 1020 versehen werden, die eine Kontaktierung der Ableiterbleche unterstützen. Auch diese Strukturelemente sind vorzugsweise Kontakthülsen oder Noppen oder Leisten, oder ähnliche Strukturen, die eine nicht vernachlässigbare Ausdehnung in senkrechte Richtung zu den Ebenen parallel zur flachen Gehäuseoberfläche der Zelle aufweisen.

Figur 11 zeigt eine Ansicht eines Zellenblocks aus Zellen gemäß diesem Ausführungsbeispiel der Erfindung, bei den die zusätzlichen Strukturen der Ableiterbleche die Form von erhabenen Polen aufweisen. Die Verspannung der Zellen zur Bildung eines mechanisch stabilen Blocks und zur elektrischen Reihenschaltung erfolgt dabei vorzugsweise mit dieser Figur nicht dargestellten Zugankern.

Verschiedene Ausführungsformen der Erfindung sind, wie der Fachmann anhand der vorliegenden Beschreibung sofort erkennt, auch miteinander kombinierbar.

## Patentansprüche

1. Galvanische Zelle (501, 1001, 1101) mit einem im Wesentlichen flachen Gehäuse und mindestens zwei elektrischen Ableitern (504) entgegengesetzter elektrischer Polarität zur Ableitung der in der galvanischen Zelle gespeicherten Energie, bei welcher
die Ableiter und das Gehäuse so ausgestaltet sind, dass die Ableiter über fensterförmige, im Wesentlichen in Ebenen parallel zur flachen Gehäuseoberfläche der Zelle angeordnete Aussparungen (503) des flachen Gehäuses von außen für elektrische Kontakte zugänglich sind,
**dadurch gekennzeichnet, dass**
mindestens einer der Ableiter (504) mit Strukturelementen (520, 1020, 1120) zur Unterstützung seiner Kontaktierung ausgestattet ist, welche so ausgestaltet sind, dass sie eine Ausdehnung in senkrechter Richtung zu den Ebenen parallel zur flachen Gehäuseoberfläche der Zelle aufweisen, wobei die Strukturelemente (520, 1020, 1120) ausgewählt sind aus Kontakthülsen, Noppen, erhabenen Polen und Leisten.

2. Galvanische Zelle nach Anspruch 1, mit Ableitern oder einem Gehäuse, die Löcher aufweisen für die Durchführung von Zugankern zum Aufbau einer Batterie aus mehreren Zellen.

## Claims

1. A galvanic cell (501, 1001, 1101) having a substantially flat housing and at least two electrical conductors (504) of opposite electrical polarity for the discharge of energy stored in the galvanic cell, in which
the conductors and the housing are configured such that the conductors are accessible from the outside for electrical contact by means of window-like recesses (503) in the flat housing arranged substantially in planes parallel to the flat housing surface of the cell, **characterized in that**
at least one of the conductors (504) is provided with structural elements (520, 1020, 1120) to support its contacting which are configured so as to exhibit an expansion perpendicular to the planes parallel to the flat housing surface of the cell, wherein the structural elements (520, 1020, 1120) are selected from among contact sleeves, nubs, raised poles and bars.

2. The galvanic cell according to claim 1 having conductors or a housing which comprises holes for the introduction of anchor rods for assembling a battery from a plurality of cells.

## Revendications

1. Cellule galvanique (501, 1001, 1101) avec un boîtier sensiblement plat et au moins deux collecteurs électriques (504) de polarités électriques opposées, pour la dérivation de l'énergie accumulée dans la cellule galvanique, où
les collecteurs et le boîtier sont réalisés de manière à rendre accessible les collecteurs de l'extérieur pour des mises en contact électriques, par des évidements (503) en forme de fenêtres du boîtier plat, disposés sur des plans sensiblement parallèles à la surface plane du boîtier de la cellule,
**caractérisée en ce que**
au moins un des collecteurs (504) est pourvu d'éléments structurels (520, 1020, 1120) destinés à faciliter sa mise en contact, lesquels sont réalisés de manière à présenter une extension dans la direction perpendiculaire aux plans parallèles à la surface plane du boîtier de la cellule, lesdits éléments structurels (520, 1020, 1120) étant sélectionnés parmi des douilles de contact, des protubérances, des pôles saillants et des baguettes.

2. Cellule galvanique selon la revendication 1, avec des collecteurs ou un boîtier pourvu de trous pour le passage de tirants pour la construction d'une batterie constituée de plusieurs cellules.
